**Europäisches Patentamt**

(19) **European Patent Office**

**Office européen des brevets**

(11) Veröffentlichungsnummer: **0 240 788**
**B1**

(12) # EUROPÄISCHE PATENTSCHRIFT

(45) Veröffentlichungstag der Patentschrift:
**09.08.89**

(51) Int. Cl.⁴: **G03B 42/02**

(21) Anmeldenummer: **87103916.0**

(22) Anmeldetag: **17.03.87**

(54) **Röntgenblattfilmkassetten-Beladegerät.**

(30) Priorität: **29.03.86 DE 3610660**

(43) Veröffentlichungstag der Anmeldung:
**14.10.87 Patentblatt 87/42**

(45) Bekanntmachung des Hinweises auf die Patenterteilung:
**09.08.89 Patentblatt 89/32**

(84) Benannte Vertragsstaaten:
**FR GB IT**

(56) Entgegenhaltungen:
**DE-A- 2 607 876**
**DE-C- 3 122 582**
**DE-C- 3 122 583**
**DE-C- 3 232 148**
**DE-C- 3 232 187**

(73) Patentinhaber: **Agfa-Gevaert AG,**
**D-5090 Leverkusen 1(DE)**

(72) Erfinder: **Müller, Jürgen, Dipl.-Ing., Bozzarisstrasse 7,**
**D-8000 München 90(DE)**

## Beschreibung

Die Erfindung betrifft ein Röntgenblattfilmkassetten-Beladegerät mit einem lichtdicht verschließbaren Schacht zur Aufnahme einer Kassette mit Mitteln zum Bestimmen des Formats einer in den Schacht eingegebenen Kassette, mit mehreren übereinanderliegenden Fächern für Blattfilmstapel verschiedener Formate enthaltende Dispensermagazine, mit einer Steuervorrichtung zum Ansteuern desjenigen Dispensermagazins, dessen Filmformat dem Filmformat einer eingegebenen Kassette entspricht, und zum Entnehmen eines Blattfilms aus diesem Dispensermagazin und mit Transportmitteln zum Transportieren eines diesem Dispensermagazin entnommenen Blattfilms zu der Kassette.

Geräte dieser Art, die meist auch als Kassettenentladegerät ausgebildet sind, sind in verschiedenen Varianten bekannt. Dabei werden die Dispensermagazine jeweils in ihrem Fach geöffnet und bei Bedarf das oberste Filmblatt mittels eines im Fach angeordneten Saugers abgehoben und an ein dem Fach zugeordnetes Transportwalzenpaar abgegeben. Dessen Transportebene liegt parallel zur Ebene des Blattfilmstapels im Dispensermagazin, so daß der Blattfilm anschließend umgelenkt werden muß. Gemäß der DE-PS 26 07 876 erfolgt diese Umlenkung durch je einen eigenen Kanal je Dispenserfach. Dies ist sehr aufwendig. Gemäß anderen bekannten Vorrichtungen, z.B. nach der DE-PS 32 32 148, wird diese Umlenkung durch entsprechend verzweigte Strecken von Transportwalzenpaaren bewirkt. Dabei stellt jede Umlenkstelle eine Gefahrenstelle dar, bei der dafür gesorgt werden muß, daß ein zu transportierender Blattfilm tatsächlich zwischen das nächste Transportwalzenpaar einläuft.

Der Erfindung liegt die Aufgabe zugrunde, ein Gerät der eingangs genannten Art so auszugestalten, daß unter Vermeidung mehrerer nebeneinanderliegender Kanäle die sich an die Dispensermagazine anschließende Blattransportstrecke weniger richtungsändernde Blattübergabestellen aufweisen kann und die Vorrichtung trotzdem einfacher wird.

Diese Aufgabe wird erfindungsgemäß gelöst durch die Merkmale des Hauptanspruchs. Weitere vorteilhafte Merkmale der Erfindung sind den Unteransprüchen entnehmbar.

Durch die Erfindung ist es möglich geworden, mit einer einzigen Saugervorrichtung, die auch mehrere Sauger aufweisen kann, den Blattfilmtransport entsprechend dem benötigten Filmformat aus jedem der vorhandenen Dispensermagazine zu einer zu beladenden Kassette durchzuführen und dabei zunächst die Umlenkung des Blattfilms aus dem Dispensermagazin in die zur Kassette führende gerade Transportstrecke und den Transport durch diese gerade Transportstrecke mit dieser einen Saugervorrichtung durchzuführen. Hierdurch entfallen die bisher üblichen Saugervorrichtungen je Dispensermagazin. Außerdem entfällt die bisher übliche Umlenkung eines in einem Dispensermagazin angesaugten Blattfilms von einem ersten Transportwalzenpaar mit horizontalem Filmdurchlauf in eine vertikale Transportwalzenstrecke.

Die Erfindung wird anhand von Zeichnungen näher erläutert. Es zeigen

Fig. 1 eine auf- und abgebrochene schematische Darstellung eines Ausführungsbeispiels eines erfindungsgemäßen Gerätes,

Fig. 2 eine Ansicht von erfindungswesentlichen Teilen einer anderen Ausführungsform eines erfindungsgemäßen Gerätes während der Ansteuerung eines benötigten Dispensermagazins durch die Saugervorrichtung,

Fig. 3 die Anordnung nach Figur 2 während des Ansaugens des obersten Blattes eines im angesteuerten Dispensermagazin vorhandenen Blattfilmstapels,

Fig. 4 die Anordnung nach den Figuren 2 und 3 beim Separieren des obersten Blattes,

Fig. 5 die Anordnung nach den Figuren 2 bis 4 beim Transportieren des Blattes zur Kassette,

Fig. 6 Teile der Anordnung nach den Figuren 2 bis 5 beim Übergeben des Blattes durch die Saugervorrichtung an ein zu einer Filmkassette führendes Transportwalzenpaar.

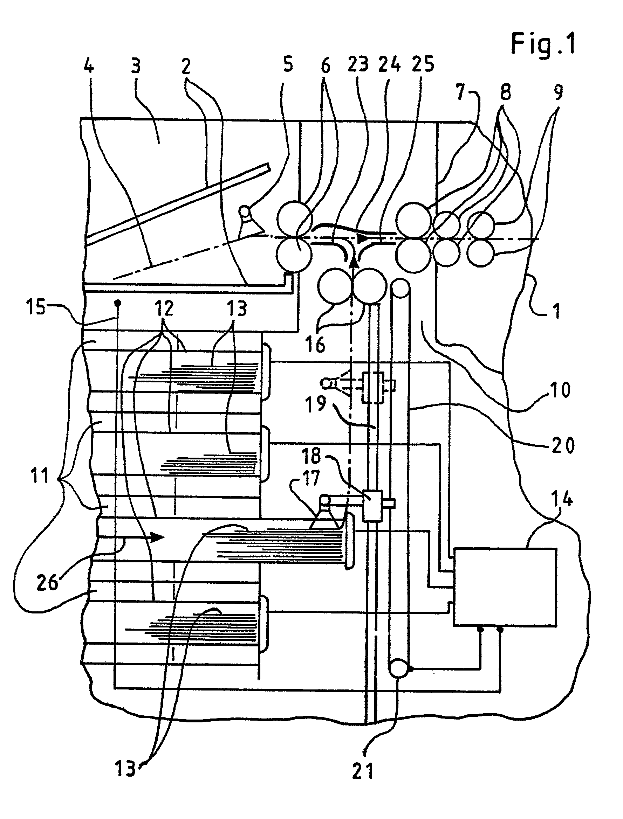

In Figur 1 ist das auf- und abgebrochenene Gehäuse eines Blattfilmkassettenent- und Beladegerätes mit 1, ein lichtdicht verschließbarer Schacht zum Eingeben einer zu ent- und/oder zu beladenden Röntgenfilmkassette 2 mit 3, ein Sauger zum Entnehmen eines Blattfilms 4 aus der im Schacht 3 geöffneten Kassette 2 mit 5 und ein am Schachtende angeordnetes Transportwalzenpaar zum Weitertransport des Blattfilms 4 mit 6 bezeichnet. Zwischen dem Kassettenschacht 3 und einer Entwicklungsvorrichtung 7 bzw. den zugehörigen Blattfilmtransportmitteln 8 und ggf. einer den Filmtransport kontrollierenden Lichtschranke 9 ist ein vertikaler Blattfilmtransportschacht 10 vorgesehen, in den auch Fächer 11 für Blattfilmvorrats- oder Dispensermagazine 12 münden. Diese Dispensermagazine 12 enthalten Blattfilmstapel 13 mit Blattfilmen der unterschiedlichen, in Kassetten 2 der unterschiedlichen Formate zu verwendenden Blattfilmgrößen oder -sorten. Mittels irgendeiner bekannten und daher nicht gezeigten Vorrichtung zur Ermittlung der Größe einer eingegebenen Kassette 2 wird das Format einer eingegebenen Kassette 2 bzw. die hierin zu verwendende Blattfilmsorte ermittelt und an einen Rechner bzw. eine Vergleichseinrichtung bzw. eine elektronische Steuervorrichtung weitergegeben, die schematisch dargestellt und mit 14 bezeichnet ist. Diese bekannte Formatermittlung ist schematisch nur durch die Leitung 15 angedeutet.

Von dem Walzenpaar 6 führt demnach eine Transportstrecke für einen aus einer Kassette 2 entnommenen belichteten Film 4 zu den Walzen 8 und in eine Entwicklungsmaschine 7 oder einen Sammelbehälter. In diese Entnahmetransportstrecke mündet senkrecht von unten (oder ggf. auch oben, je nach der Anordnung der Fächer 11 gegenüber dem Schacht 3) eine Zuführtransportstrecke für die Beladung einer eingegebenen Kassette 2. Diese Zuführtransportstrecke bzw. die Zuführtransportmittel werden gebildet durch ein mit seiner Transportebene senkrecht zu der des Walzenpaares 6 verlaufendes Walzenpaar 16 und eine Saugervorrichtung 17, 18, deren Betätigung ebenfalls durch die Steuervorrichtung 14 gesteuert wird. Das Walzenpaar 16 liegt etwa so weit vom Walzenpaar 6 entfernt und zwischen den Walzenpaaren 6 und 8, daß ein durch das Walzenpaar 16 antransportierter Blattfilm zum Walzenpaar 6 umgelenkt werden kann. Damit nun von der Kassette 2 weg zu transportierender Blattfilm 4 nicht zum Walzenpaar 16 und vom Walzenpaar 16 antransportierter Blattfilm nicht zu den Walzenpaaren 8 gelangen kann, sind zwischen den Walzenpaaren 6, 16, 8 Leitflächen 23 bis 25 angeordnet, die durch ihre Krümmung und Schrägflächen ab- bzw. anzutransportierende Filme sicher in ihre Transportstrecken zur Entwicklungsstation bzw. in die Kassette 2 lenken.

Die Ausführungsformen nach den gezeigten Figuren beruhen auf der Voraussetzung, daß jeweils das Dispensermagazin 12, das Blattfilm des für die Beladung einer eingegebenen Kassette 2 benötigten Formats enthält, in den Transportschacht 10 mittels der Steuervorrichtung 14 und einer nicht gezeigten Antriebsvorrichtung in eine geöffnete Stellung transportiert wird. Dadurch kann die Saugervorrichtung 17 direkt von oben gegen den entsprechenden Blattfilmstapel 13 bewegt werden. Gemäß dem in Figur 1 gezeigten Beispiel ist dieses formatgerechte, in den Transportschacht 10 bewegte Magazin das zweitunterste Dispensermagazin. Die Bereitstellung des jeweiligen Magazins 12 kann durch alle hierfür geeigneten Transportmittel erfolgen, beispielsweise nach der nicht vorveröffentlichten EP-A 0 239 871.

Die Saugereinrichtung 17, 18 weist mindestens einen Sauger 17, vorzugsweise aber ein Saugerpaar oder noch weitere, gleichzeitig arbeitende Sauger auf. Die Saugereinrichtung 17, 18 ist längs mindestens einer Führungsstange 19 verschiebbar und mit einem umlaufenden Seilzug 20 zum Ab- und Aufwärtsbewegen der Sauger 17 verbunden. Der Antrieb 21 des Seilzugs 20 wird durch die Steuereinrichtung 14 so gesteuert, daß die Sauger 17 auf das oberste Blatt desjenigen Blattstapels bzw. Magazins aufsetzen, die dem Format eines in eine Kassette 2 einzugebenden Blattfilms entsprechen, also im Transportschacht 10 bereitgestellt sind. Nach dem Aufsetzen und Ansaugen des obersten Blattes werden die Sauger 17 um etwa 90° geschwenkt, so daß das betreffende Blatt vom Stapel separiert wird. Dann werden die Sauger 17 in der geschwenkten Stellung zusammen mit dem Blatt nach oben (bzw. unten) zu dem Walzenpaar 16 mittels des Seilzugs 20 längs der Führung 19 bewegt. Sobald die Blattoberkante das Walzenpaar 16 erreicht hat, setzen sich die Walzen 16 in Bewegung und erfassen das Blatt, während gleichzeitig die Saugervorrichtung 17 abgeschaltet wird. Das eine transportierte Blatt wird dann mittels der Walzen 16, 6 in die zu belandende Kassette 2 eingeführt. Die Saugervorrichtung bleibt in dieser Stellung, bis sie von der Steuereinrichtung 14 den Befehl für eine erneute Ansteuerung eines bereitgestellten Dispensermagazins erhält.

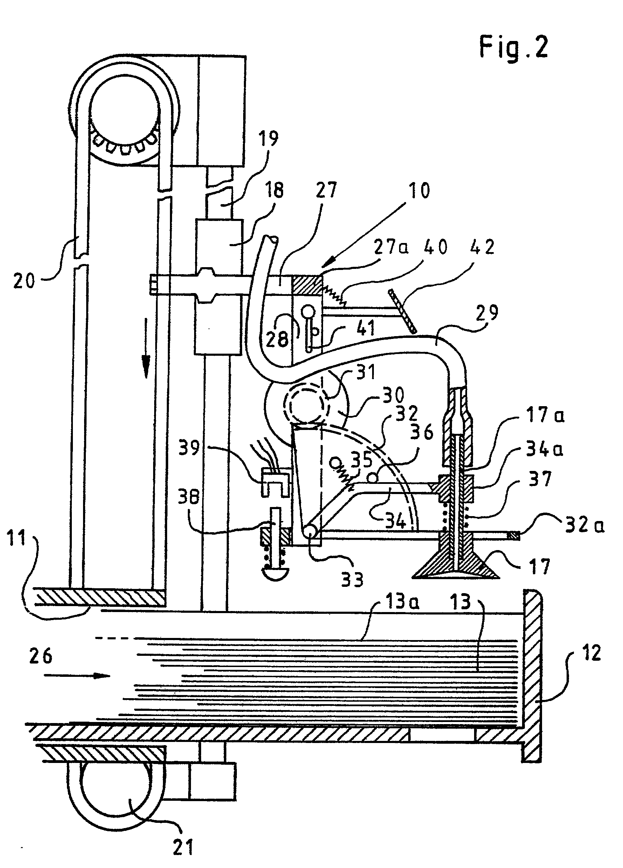

In den Figuren 2 bis 6 ist ein Ausführungsbeispiel für die Steuerung und Betätigung der Sauger 17 gezeigt. Dabei sind abweichend von der Ausführungsform nach Figur 1 Seilzüge 20 und Führungsstangen 19 im Transportschacht 10 zu beiden, in Einschubrichtung 26 der Magazine verlaufenden Seiten der Fächer 11 bzw. Dispensermagazine 12 angeordnet. An jeder Führungsbuchse 18 ist ein Ausleger 27, 27a befestigt, der rechtwinkelig ausgebildet ist und über den Bereich des geöffneten, in den Schacht 10 transportierten Dispensermagazins 12, also über dessen Blattstapel 13, reicht. An dem freien Ende des Auslegerteiles 27a ist je ein Träger 28 nach abwärts gerichtet befestigt. An diesem kann der jeweilige, zur bekannten und nicht gezeigten Vakuumanlage führende Zuleitungsschlauch 29 des oder der Sauger 17 beweglich befestigt sein. An dem Träger 28 ist ein Motor 30 mit einem Ritzel 31 befestigt, wobei der Motorlauf durch die Steuervorrichtung 14 steuerbar ist. Mit dem Ritzel 31 kämmt ein am Träger 28 drehbar gelagerter Zahnsektor 32. Auf der Achse 33 des Zahnsektors 32 ist auch ein Winkelhebel 34 drehbar gelagert, der durch eine Feder 35 gegen einen auf dem Zahnsektor 32 angeordneten Anschlag 36 gezogen wird. An seinem freien Ende trägt der Winkelhebel eine Hülse 34a, die einen Hals 17a des Saugers 17 umschließt. Zwischen dem Sauger 17 und der Hülse 34a ist eine Pufferfeder 37 angeordnet.

Am Träger 28 ist außerdem ein Näherungsschalter 38, 39 angeordnet, der der Steuervorrichtung 14 das Aufsetzen des Saugers auf dem obersten Blatt 13a des Stapels 13 meldet. Weiterhin ist am Träger 28 ein gegen den Anschlag mittels einer Feder 40 ziehbarer Winkel 41 drehbar gelagert, der im Bewegungsweg eines Steuerarmes 32a des Zahnsektors 32 angeordnet ist und eine Klemmplatine 42 trägt.

In einigen der Figuren 2 bis 6 sind einzelne für die jeweilige Funktionsstellung weniger wichtige Teile der Übersichtlichkeit halber weggelassen worden. Die Funktionsweise dieser Steuervorrichtung für die Saugerbewegung ist dabei folgende:

Gemäß Figur 2 wird die gesamte Saugervorrichtung mittels des Seilzugs 20 auf den bereitgestellten Blattfilmstapel 13 zu bewegt. Dabei befindet sich der Zahnsektor 32 in seiner Ausgangsstellung. Der Winkelhebel 34 wird in Anlage am Anschlag 36 gehalten. Der Näherungsschalter 38, 39 ist geöffnet. Die Klemmplatine 42 steht in einer Schräglage.

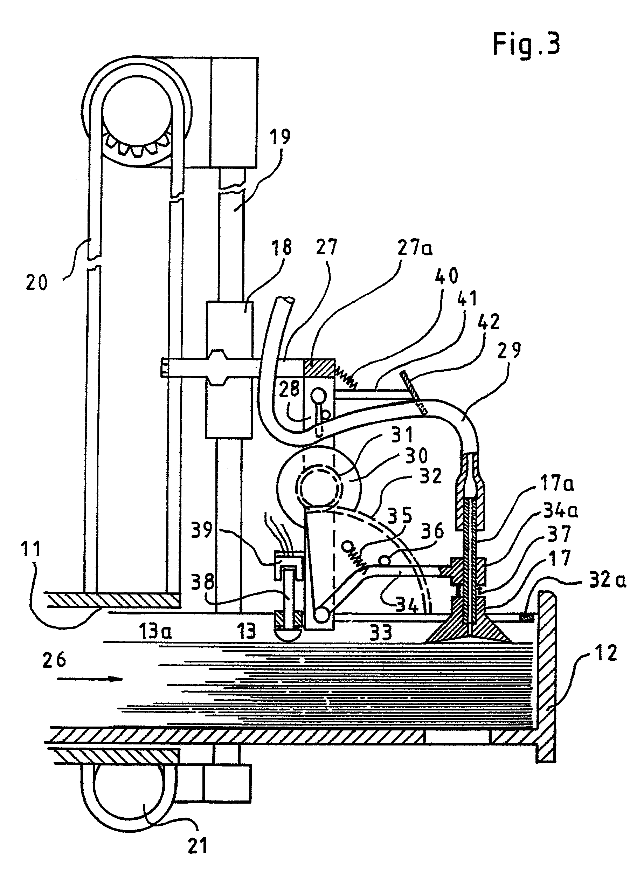

Gemäß Figur 3 haben Sauger 17 und Näherungsschalter 38 auf dem obersten Blatt 13a des Blattstapels 13 aufgesetzt. Die Pufferfeder 37 ist zusammengefügt worden und der Näherungsschalter 38, 39 wurde dabei geschlossen. Dieser Näherungsschalter 38, 39 schaltet über die Steuervorrichtung 14 das Vakuum für den Sauger 17 ein, so daß dieser das oberste Blatt 13 ansaugt, und setzt den Motor 30 für die Saugerbewegung in Betrieb.

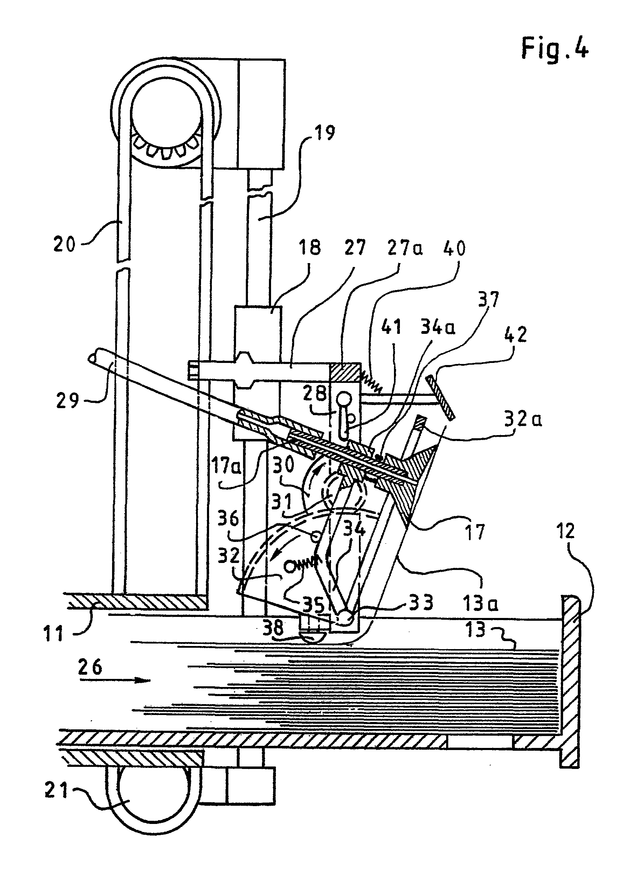

Entsprechend Figur 4 treibt daraufhin das Ritzel 31 den Zahnsektor 32 an, so daß das angesaugte Blatt 13a vom Stapel 13 separiert und seine Stirnkante bis zu 90° geschwenkt wird.

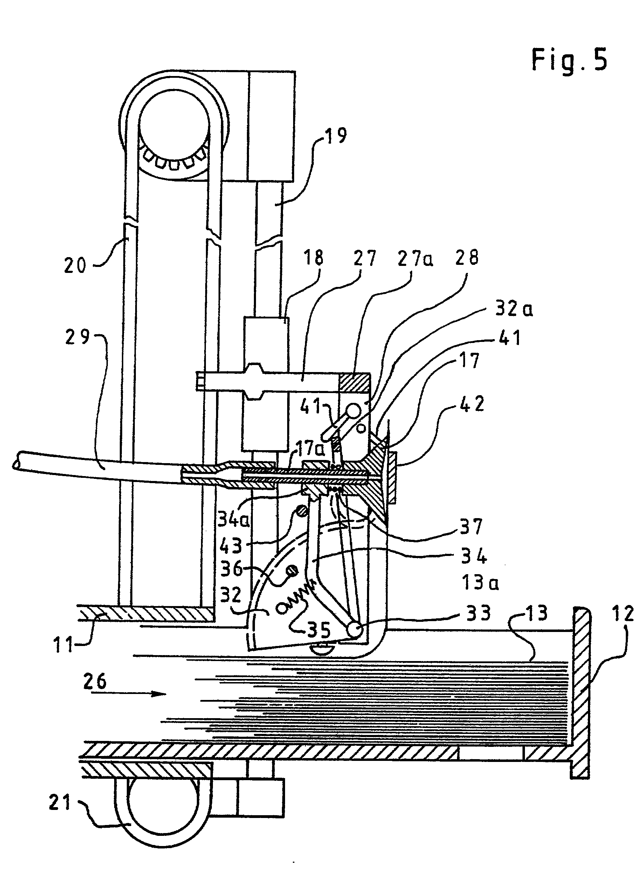

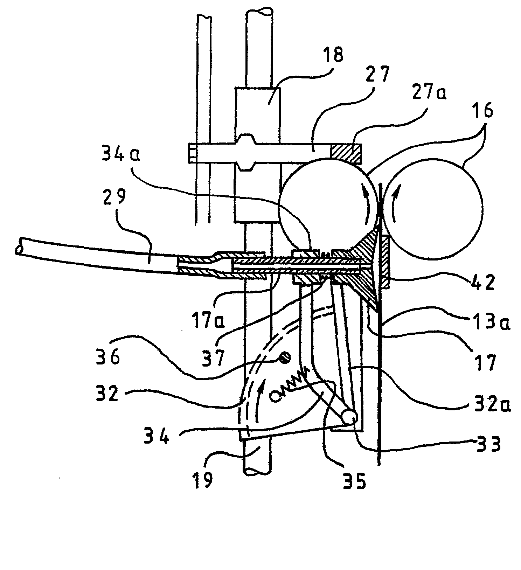

Gemäß Figur 5 ist nach einer Schwenkung des Winkelhebels 34 um etwa 90° dieser gegen einen am Träger 28 angeordneten Anschlag 43 gelaufen und hebt sich unter Spannung der Feder 35 vom Anschlag 36 ab. Der Steuerarm 32a hat hierbei auch den anderen Winkelhebel 41 verschwenkt, so daß die Klemmplatine 42 das Blatt 13a zusätzlich an den Sauger 17 klemmt und somit sicher hält. In dieser Stellung wird über einen nicht gezeigten Schalter der Steuervorrichtung 14 der Antriebsmotor 21 des Seilzugs 20 ein- und der Steuermotor 30 ausgeschaltet, so daß die gesamte Saugervorrichtung nun in dieser Saugerstellung nach aufwärts transportiert wird, bis die Blattstirnkante das Einzugswalzenpaar 16 (vgl. Fig. 1) erreicht, vgl. Fig. 6. Mittels der Steuervorrichtung 14 wird das Einzugswalzenpaar 16 eingeschaltet und erfaßt das Blatt 13a. Das Vakuum des Saugers 17 wird so rechtzeitig abgeschaltet, daß sich der Sauger 17 etwas vom Blatt 13a abhebt und dieses an der Klemmplatine 42 vorbei von den Walzenpaaren 16, 6 in die bereitstehende Kassette 2 eingeführt wird.

Beim Beladen der nächsten Kassette 2 wird die Saugervorrichtung wieder in die Stellung nach den Figuren 2 und 3 zurückgefahren und dann wiederholen sich die beschriebenen Vorgänge.

Statt der gezeigten Ausführungsbeispiele wäre es jedoch auch möglich, das jeweils anzusteuernde, geöffnete Dispensermagazin 12 in seinem Fach 11 zu belassen und die Fachhöhe so zu vergrößern, daß die Sauger 17 in das Fach einschwenken und auf den jeweiligen Stapel 13 aufsetzen können. Schließlich wäre es möglich, die Einziehwalzen 16 und die Leitflächen 23 bis 25 wegzulassen und mittels einer weiteren Schwenkung der Sauger 17 ein zu transportierendes Blatt direkt bis an die Aus- und Einzugswalzen 6 heranzuführen. Dazu könnte beispielsweise die Steuervorrichtung für den Sauger gegenüber den Figuren 2 bis 6 seitenverkehrt an die Ausgestaltung nach Figur 1 angesetzt werden, der Winkelhebel 34 zum Eingreifen in ein Fach verlängert und anders geformt, z.B. mehrfach abgewinkelt sein und der Zahnsektor 32 über einen größeren Winkelbereich reichen.

## Patentansprüche

1. Röntgenblattfilmkassetten-Beladegerät mit einem lichtdicht verschließbaren Schacht zur Aufnahme einer Kassette, mit Mitteln zum Bestimmen des Formats einer in den Schacht eingegebenen Kassette, mit mehreren übereinanderliegenden Fächern für Blattfilmstapel verschiedener Formate enthaltende Dispensermagazine, mit einer Steuervorrichtung zum Ansteuern desjenigen Dispensermagazins, dessen Filmformat dem Filmformat einer eingegebenen Kassette entspricht, und zum Entnehmen eines Blattfilms aus diesem Dispensermagazin und mit Transportmitteln zum Transportieren eines diesem Dispensermagazin entnommenen Blattfilms zu der Kassette, dadurch gekennzeichnet, daß die Transportmittel durch wenigstens ein vor einer geöffneten Kassette (2) bzw. im Geräteinnern vor dem Schacht (3) angeordnetes Transportwalzenpaar (6 bzw. 16) und wenigstens einen Sauger (17) oder ein Saugerpaar, der bzw. die zwischen dem Transportwalzenpaar (6 bzw. 16) und dem am weitesten hiervon entfernt liegenden Dispensermagazin (12) verschiebbar sind, gebildet werden, daß der oder die Sauger (17) mittels einer von der Steuervorrichtung (14) betätigbaren Antriebsvorrichtung (20; 30, 32) jeweils an die Oberfläche des Blattfilmstapels (13) des Dispensermagazins (12), das dem Format einer eingegebenen Kassette entsprechende Blattfilme enthält, heranführbar und nach Ansaugen des obersten Blattfilms (13a) des Blattfilmstapels (13) schwenkbar und zusammen mit dem separierten Blattfilm (13a) zu dem Transportwalzenpaar (6 bzw. 16) zurückbewegbar sind und daß durch das oder die Transportwalzenpaare (16, 6) der so geförderte Blattfilm (13a) erfaßbar und in die Kassette (2) einschiebbar ist.

2. Gerät nach Anspruch 1, dadurch gekennzeichnet, daß mittels der Steuervorrichtung (14) und je eines Magazinantriebs jeweils das Dispensermagazin (12), das dem Format einer eingegebenen Kassette (2) entsprechende Blattfilme enthält, in eine geöffnete Stellung in einen Blattfilmtransportschacht (10) in den Bewegungsbereich des oder der Sauger (17) transportierbar ist.

3. Gerät nach Anspruch 1, dadurch gekennzeichnet, daß in jedem Fach (11) über dem darin angeordneten, geöffneten Dispensermagazin (12) ein Freiraum zum Eingreifen des oder der Sauger vorgesehen ist.

4. Gerät nach einem der Ansprüche 1 bis 3, dadurch gekennzeichnet, daß die den oder die Sauger (17) aufweisende Saugervorrichtung längs wenigstens einer Führungsstange (19) mittels eines endlosen, motorgetriebenen Seilzugs (20) hin- und herverschiebbar ist.

5. Gerät nach Anspruch 2 oder 4, dadurch gekennzeichnet, daß die Führungsstange (19) und der Seilzug (20) im Transportschacht (10) stirnseitig vor den geöffneten Dispensermagazinen (12) gelagert sind.

6. Gerät nach einem der Ansprüche 1 bis 4, dadurch gekennzeichnet, daß je eine Führungsstange (19) und ein Seilzug (20) im Transportschacht (10) seitlich der in Einschubrichtung (26) verlaufenden Längsseiten der Dispensermagazine (12) angeordnet sind und die Sauger (17) an senkrecht zu den Längsseiten verlaufenden Auslegern (27, 27a) gelagert sind.

7. Gerät nach Anspruch 4 oder einem der vorhergehenden Ansprüche, dadurch gekennzeichnet, daß an einer die Führungsstange (19) umgreifenden Hülse (18) ein am Seilzug (20) befestigter Träger (27, 28) für einen Steuermotor (30) angeordnet ist, daß ein Ritzel (31) des Steuermotors (30) mit einem am Träger (28) drehbar gelagerten Zahnsektor (32) in Eingriff steht und daß koaxial zu diesem ein wenigstens einen Sauger (17) tragender Winkelhebel (34) drehbar gelagert und mittels einer Feder (35) gegen einen exzentrischen Anschlag (36) am Zahnsektor (32) ziehbar ist.

8. Gerät nach Anspruch 7, dadurch gekennzeichnet, daß an dem Träger (28) eine einen vom Sauger (17) angesaugten Blattfilm (13a) klemmende Klemmplatine (42) schwenkbar gelagert und unter der Wirkung einer Feder (40) in einer nicht klemmenden Ausgangsstellung haltbar ist.

9. Gerät nach Anspruch 8, dadurch gekennzeichnet, daß ein Arm (41) der Klemmplatine (42) im Bewegungsweg eines Armes (32a) des Zahnsektors (32) angeordnet ist.

10. Gerät nach Anspruch 7 oder einem anderen der vorhergehenden Ansprüche, dadurch gekennzeichnet, daß an dem Träger (28) ein bei dessen Bewegung gegen einen Blattfilmstapel (13) auf diesen aufsetzender, federnder Fühler (38) angeordnet ist, in dessen Bewegungsweg ein Schalter (39) für den Steuermotor (30) und/oder die Vakuumanlage für den oder die Sauger (17) angeordnet ist.

## Claims

1. Loading apparatus for X-ray sheet film cassettes having a light-excluding closable cavity for receiving a cassette, having means to determine the size of a cassette inserted into the cavity, having dispensing magazines containing several compartments located one above another for stacks of sheet film of different sizes, having a control device for controlling this type of dispensing magazine, the film size of which corresponds to the film size of an inserted cassette, and to remove a sheet film from this dispensing magazine and having transporting means to transport one sheet film taken from this dispensing magazine to the cassette, characterised in that the transporting means are constructed from at least one pair of transporting rollers (6 and 16) arranged in front of an open cassette (2) or in the interior of the apparatus in front of the cavity (3), and at least one suction device (17) or a pair of suction devices which can be moved between the pair of transporting rollers (6 and 16) and the dispensing magazine (12) lying furthest away from them, in that the suction device or devices (17) can be moved each time to the surface of the sheet film stack (13) of the dispensing magazine (12) which contains sheet films corresponding to the size of an inserted cassette by means of a drive device (20; 30, 32) actuated by the control device (14), and can be pivoted after sucking the uppermost sheet film (13a) of the sheet film stack (13) and can be moved back together with the separated sheet film (13a) to the pair of transporting rollers (6 and 16), and in that the thus transported sheet film (13a) can be taken by one or more pairs of transporting rollers (16, 6) and can be inserted into the cassette (2).

2. Apparatus according to claim 1, characterised in that each dispensing magazine (12) containing sheet films corresponding to the size of an inserted cassette (2) can be transported in an open position to a sheet film transport cavity (10) in the region of movement of the suction device or devices (17) by means of the control device (14) and in each case a magazine drive.

3. Apparatus according to claim 1, characterised in that clearance is provided in each compartment (17) above the open dispensing magazine (12) arranged therein to allow the suction device or devices to engage.

4. Apparatus according to one of claims 1 to 3, characterised in that the suction apparatus having the suction device or devices (17) can be moved back and forth along at least one guide rod (19) by means of an infinite, motor-driven cable (20).

5. Apparatus according to claim 2 or 4, characterised in that the end faces of the guide rod (19) and the cable (20) in the transport cavity (10) are positioned in front of the open dispensing magazines (12).

6. Apparatus according to one of claims 1 to 4, characterised in that a guide rod (19) and a cable (20) are arranged in each transport cavity (10) to the side of the longitudinal sides of the dispensing magazine (12) extending in the direction of insertion (26) and the suction devices (17) are positioned on arms (27, 27a) extending vertically to the longitudinal sides.

7. Apparatus according to claim 4 or one of the preceding claims, characterised in that a carrier (27, 28) for a control motor (30) which is attached to the cable (20) is arranged on a sleeve (18) surrounding the guide rod (19), in that a pinion (31) of the control motor (30) engages with a toothed sector (32) rotatably mounted on a carrier (28), and in that an angle lever (34) carrying at least one suction device (17) is rotatably mounted coaxially to this toothed sector (32) and can be pulled by means of a spring (35) against an excentric stop (36) on the toothed sector (32).

8. Apparatus according to claim 7, characterised in that a clamping plate (42) clamping a sheet film (13a) sucked by the suction device (17) is pivotably mounted on the carrier (28) and can be maintained in a non-clamping starting position by the action of a spring (40).

9. Apparatus according to claim 8, characterised in that an arm (41) on the clamping plate (42) is arranged in the path of movement of an arm (32a) of the toothed sector (32).

10. Apparatus according to claim 7 or one other of the preceding claims, characterised in that a spring sensor (38) which is lowered onto a sheet film stack (13) as the carrier (28) moves towards it, is arranged on the carrier (28), a switch (39) for the control motor (30) and/or the vacuum apparatus for the suction device or devices (17) being arranged in the path of movement of the sensor (38).

## Revendications

1. Appareil de chargement de cassettes de film en feuilles pour rayons X, comportant une cuvette, obturable de façon étanche à la lumière, pour recevoir une cassette; des moyens pour déterminer le format d'une cassette introduite dans la cuvette; plusieurs casiers disposés l'un au-dessus de l'autre pour des magasins distributeurs contenant des piles de films en feuilles de différents formats; un dispositif de commande pour activer le magasin distributeur dont le format de film correspond au format de film d'une cassette introduite, et pour extraire un film en feuille de ce magasin distributeur, ainsi que des moyens de transport pour transporter jusqu'à la cassette un film en feuille extrait de ce magasin distributeur, caractérisé en ce que les moyens de transport sont formés par au moins une paire (6 et/ou 16) de rouleaux de transport disposée devant une cassette ouverte (2) et/ou à l'intérieur de l'appareil devant la cuvette (3) et par au moins une ventouse (17), ou une paire de ventouses, qui peut, ou qui peuvent, coulisser entre la paire (6 et/ou 16) de rouleaux de transport et le magasin distributeur (12) qui s'en trouve le plus éloigné; en ce qu'au moyen d'un dispositif d'entraînement (20; 30, 32) manœuvrable par le dispositif de commande (14), la ventouse, ou les ventouses, (17), peut, ou peuvent, être respectivement amenée, ou amenées, à la surface de la pile (13) de films en feuilles du magasin distributeur (12) qui contient des films en feuilles correspondant au format d'une cassette introduite, pivoter après aspiration du film en feuilles supérieur (13a) de la pile (13) de films en feuilles, et revenir à la paire (6 et/ou 16) de rouleaux de transport en emportant le film en feuille (13a) séparé; et en ce que le film en feuille ainsi transporté (13a) peut être saisi par la paire, ou les paires (16, 6) de rouleaux de transport et introduit dans la cassette (2).

2. Appareil selon la revendication 1, caractérisé en ce qu'au moyen du dispositif de commande (14) et de, chaque fois, un mécanisme d'entraînement du magasin, le magasin distributeur (12), qui contient les films en feuilles correspondant au format d'une cassette introduite (2), peut être amené en position ouverte dans une gaine (10), située dans la zone de déplacement de la ventouse ou des ventouses (17), de transport des films en feuilles.

3. Appareil selon la revendication 1, caractérisé en ce que dans chaque casier (11), au-dessus du magasin distributeur (12) ouvert, qui y est disposé, est prévu un espace libre pour l'intervention de la ventouse ou des ventouses.

4. Appareil selon l'une des revendications 1 à 3, caractérisé en ce que le dispositif à ventouse qui présente la ventouse ou les ventouses (17) peut coulisser en va et vient le long d'au moins une tige de guidage (19) au moyen d'un câble sans fin (20) entraîné par un moteur.

5. Appareil selon la revendication 2 ou 4, caractérisé en ce que la tige de guidage (19) et le câble (20) sont placés dans la gaine (10) de transport, de front, devant les magasins distributeurs ouverts (12).

6. Appareil selon l'une des revendications 1 à 4, caractérisé en ce que chaque fois une tige de guidage (19) et un câble (20) sont disposés de part et d'autre des côtés longitudinaux, dirigés dans la direction du coulissement des magasins, de ces magasins distributeurs (12); et en ce que les ventouses (17) sont placées sur des bras (27, 27a) dirigés perpendiculairement aux côtés longitudinaux.

7. Appareil selon la revendication 4 ou l'une des revendications précédentes, caractérisé en ce que sur une douille qui enserre la tige de guidage (19) est disposé un support (27, 28), fixé au câble (20), pour un moteur de commande (30); en ce qu'un pignon (3') du moteur de commande (30) engrène avec un secteur denté (32) qui tourillonne sur le support (28); et en ce que, coaxialement à ce secteur, tourillonne un levier coudé (34) qui porte au moins une ventouse (17) et qu'un ressort (35) attire contre une butée excentrée (36) prévue sur le secteur denté (32).

8. Appareil selon la revendication 7, caractérisé en ce que sur le support (28) est portée, avec liberté de pivotement, une platine de coincement (42) qui vient coincer un film en feuille (13a) aspiré par la ventouse (17) et qu'un ressort (40) peut maintenir dans une position initiale de non-coincement.

9. Appareil selon la revendication 8, caractérisé en ce qu'un bras (41) de la platine de coincement (42) est disposé sur le chemin du déplacement d'un bras (32a) du secteur denté (32).

10. Appareil selon la revendication 7 ou une autre des revendications précédentes, caractérisé en ce que sur le support (28) est disposé un détecteur élastique (38) qui, lors du déplacement de ce support en direction d'une pile (13) de films en feuilles, repose sur cette pile et sur le chemin du déplacement duquel est disposé un commutateur (39) pour le moteur de commande (30) et/ou pour l'installation de vide pour la ventouse ou pour les ventouses (17).

Fig.1

Fig.2

Fig.3

Fig.4

Fig. 5